# EUROPEAN PATENT SPECIFICATION

(11) **EP 2 935 435 B1**
(45) Date of publication and mention of the grant of the patent: **11.10.2017**
(21) Application number: 13805380.6
(22) Date of filing: 16.12.2013
(51) Int. Cl.: C08K 5/00, C08K 5/3467, C08K 13/02, C09D 167/06, C09D 175/14

(54) **DRIER FOR AUTO-OXIDISABLE COATING COMPOSITIONS**
TROCKNUNGSMITTEL FÜR SELBSTOXIDIERENDE BESCHICHTUNGSZUSAMMENSETZUNGEN
SICCATIF POUR COMPOSITIONS DE REVÊTEMENT AUTO-OXYDABLE

(30) Priority: 18.12.2012 EP 12197826
(43) Date of publication of application: 28.10.2015
(73) Proprietor: Akzo Nobel Coatings International B.V., 6824 BM Arnhem (NL)
(72) Inventor: MEIJER, Michel Daniel, NL-2324 MC Leiden (NL); FLAPPER, Jitte, NL-1115 GH Duivendrecht (NL)
(74) Representative: Akzo Nobel IP Department
(86) International application number: PCT/EP2013/076631
(87) International publication number: WO 2014/095670

(56) References cited:
- WO-A1-2011/098583
- WO-A1-2011/098587
- OYMAN Z O ET AL: "A promising environmentally-friendly manganese-based catalyst for alkyd emulsion coatings", POLYMER, ELSEVIER SCIENCE PUBLISHERS B.V, GB, vol. 45, no. 22, 13 October 2004 (2004-10-13), pages 7431-7436, XP004595792, ISSN: 0032-3861, DOI: 10.1016/J.POLYMER.2004.08.052 cited in the application
- OYMAN ET AL: "Catalytic activity of a dinuclear manganese complex (MnMeTACN) on the oxidation of ethyl linoleate", APPLIED CATALYSIS A: GENERAL, ELSEVIER SCIENCE, AMSTERDAM, NL, vol. 316, no. 2, 8 December 2006 (2006-12-08), pages 191-196, XP005798458, ISSN: 0926-860X, DOI: 10.1016/J.APCATA.2006.09.023
- OYMAN Z O ET AL: "Oxidative drying of alkyd paints catalysed by a dinuclear manganese complex (MnMeTACN)", SURFACE COATINGS INTERNATIONAL. PART B: COATINGS TRANSACTIONS, SPRINGER, BOSTON, US, vol. 88, no. 4, 1 December 2005 (2005-12-01), pages 269-275, XP008138185, ISSN: 1476-4865, DOI: 10.1007/BF02699583 cited in the application

## Description

### FIELD OF THE INVENTION

The present invention is directed to a process for producing a Mn-based drier for use in an auto-oxidisable coating composition. The present invention is further directed to an auto-oxidisable coating composition comprising such drier, to the use of said composition and also to a substrate coated with said composition.

### BACKGROUND TO THE INVENTION

Many items in our everyday life are provided with coatings which have a protective, signal, or decorative function. In recent years, considerable effort has been expended to develop coating compositions with enhanced sustainability, that is coatings characterized by a low content of volatile organic compounds (VOC) - and which indeed may be solvent-free - and / or coatings which contain resins and additives that are based on renewable resources. In the latter regard, it is now well-known to employ unsaturated-fatty acid functionalized resins in coating compositions because such resins are largely derivable from agricultural products and are also easily biodegraded.

The oxidative air drying of compositions containing fatty acid functionalized resins - such an alkyd resins - is due to autoxidation and cross-linking of the unsaturated oil/fatty acid component of the resin with simultaneous evaporation of the carrier solvent(s). Absorption of oxygen from the air causes peroxide formation and peroxide decomposition, which results in the generation of free radicals (Bieleman, J. et al. "Chapter 7: Catalytically Active Additives" in Additives for Coatings, J. Bieleman (ed.) Wiley-VCH (2000)). The free radicals initiate cross-linking and formation of higher molecular weight polymers, eventually leading to a solidified "air dried" film or coating.

The time for such a composition to dry depends on the concentration and type of unsaturated oil used to prepare the resin. Autoxidation and crosslinking of the unsaturated oil/fatty acid component can proceed unaided, but the time for drying is generally found to be unacceptably long for many practical purposes. The reactions are significantly accelerated by the presence of a metal-based drying catalyst, commonly referred to as a "drier". Whereas an alkyd coating may takes months to dry in the absence of a drying catalyst, in the presence of such a catalyst, drying can be accomplished within a few hours. The metal within the drying catalyst catalyzes autoxidation by forming a complex with both atmospheric oxygen and the double bonds of the unsaturated fatty acid groups within the composition.

Examples of known drier salts include polyvalent salts containing cobalt, calcium, copper, zinc, iron, zirconium, manganese, barium, zinc, strontium, lithium and potassium as the cation; and halides, nitrates, sulphates, carboxylates, such as acetates, ethylhexanoates, octanoates and naphthenates, or acetoacetonates as the anion.

The catalytic activity of the metal during decomposition of the (hydro)peroxide relies on the repeated transition of the metal ion from the lower to the higher oxidation state and back again, leading to reduction and oxidation of the hydroperoxides to catalyze and accelerate oxidation of the unsaturated oil component of the composition. For this reason, transition metals have more been commonly employed in such driers, as transition metals are capable of switching from a lower valence state to a higher valence state in a redox reaction with fatty acid peroxides present in the alkyd composition.

To date, driers based on cobalt have been most widely used because of their good performance at ambient temperature. However, because the cobalt salts will most likely be restricted in the near future because of regulatory issues, it is now desired to find alternative drier compounds that show at least comparable drying performance to that of cobalt driers and which can replace cobalt based driers completely in oxidatively air-drying coatings.

Driers based on non-cobalt metal salts, and in particular on manganese (Mn), are known from *inter alia*: EP 1 382 648 A1 (Van Gorkum et al); WO 2003/093384 (Oostveen et al.); E. Bouwman, R. van Gorkum , J. Coat. Technol. Res., 4, 491-503 (2007); and, R. van Gorkum et al., Journal of Catalysis 252 1 10-1 18 (2007). It is however considered that these prior art Mn-based driers: may not promote sufficient drying in a coating composition comprising an alkyd resin, especially in relation to tack free time; and, can yield coatings which suffer from severe dark yellowing.

Dinuclear manganese based complexes, [Mn^{IV}₂(µ-O)₃L₂](PF₆)₂ (or MnMeTACN) wherein L is 1,4,7-trimethyl-1,4,7-triazacylononane have been disclosed as catalysts for the oxidative drying of alkyd paints (Oyman et al., Surface Coatings International Part B: Coatings Transactions, Vo. 88, B4, 231-315, December 2005). WO2011/098583, WO2011/098584 and WO2011/098587 (all DSM IP Assets B.V.) suggested that the alkyd coatings of Oyman did not dry with the desired efficiency and were prone to deleterious skin formation when stored inside a pot. Accordingly, these three citations have proposed modifications to the MnMeTACN catalyst wherein: the bridging oxygen (µ-O) is optionally replaced by organic residues; and / or one or more methyl of 1,4,7-trimethyl-1,4,7-triacylcyclononane is optionally replaced by substituted or un-substituted C₂-C₂₀ alkyl groups or by substituted or un-substituted C₆-C₂₀ aryl groups; and / or where the (PF₆)₂ anion is optionally replaced by a carboxylate anion.

The crystal structure of several binuclear manganese complexes have been resolved, see for example Wieghart et al. J.A.C.S. 110(22):7398-7411 (1988) and Romakh et al. Inorg. Chim. Acta 359(5):1619-1626 (2006).

Oyman et al, Polymer (2004) 45:7431-7436 describes the uptake of oxygen, and the formation of hydrogenperoxides in ethyl lineolate emulsions catalyzed by dinuclear manganese based complexes ([Mn^{IV}₂(µ-O)₃L₂](PF₆)₂ wherein L is 1,4,7-trimethyl-1,4,7-triazacylononane). This reference further shows effects of additional amines on peroxide formation. Amines can be used in alkyd resins with cobalt catalysts to increase cure speed, but this increase in cure speed is accompanied with increased yellowing. Further, Oyman reports that with large amounts of amine, no oligomer formation was observed.

Despite these developments, there still remains a strong need in the art for alternative or better non-cobalt catalysts which can provide for fast drying which concomitantly provide for reduced yellowing of the coatings compositions which contain them. The present invention provides for a drier with a better cure speed-yellowing balance; i.e. either the cure speed can be enhanced in comparison with prior art non-cobalt driers, while keeping yellowing at about the same level, or the yellowing can be reduced with about the same cure speed. Preferably, the coating composition has good storage stability without the need to provide adjunct ingredients in larger amounts than commonly used, such as anti-skinning compounds.

### STATEMENT OF THE INVENTION

Accordingly, in a first aspect the invention is directed to a drier for an air drying auto-oxidisable resin composition, the drier comprising a manganese triaza complex comprising the following structure: 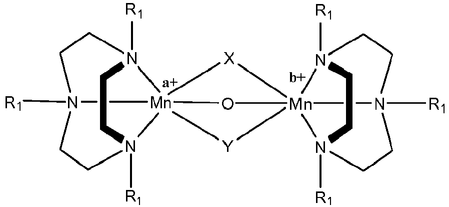 wherein
R₁ = C₁-C₂₀ alkyl optionally substituted with heteroatoms, or C₆-C₂₀ aryl optionally substituted with heteroatoms;
X and Y are independently selected from O and OC(R₂)O, in which a=4 when X=O, and a=3 when X= OC(R₂)O, and in which b=4 when Y=O, and b=3 when Y= OC(R₂)O;
Wherein R₂= C₁-C₂₀ alkyl optionally substituted with heteroatoms, C₆-C₂₀ aryl optionally substituted with heteroatoms, or a polymeric residue,
and one or more anions, being chosen PF₆⁻, SbF₆⁻, AsF₆⁻, BF₄⁻, B(C₆F₅)₄⁻, Cl⁻, Br⁻, I⁻, NO₃⁻, or R₃COO⁻ or SO₄²⁻, and wherein R₃ is C₁-C₂₀ alkyl optionally substituted with heteroatoms, C₆-C₂₀ aryl optionally substituted with heteroatoms, or a polymeric residue,
and wherein the drier comprises an additional amount of
1,4,7-trialkyl-1,4,7-triazacyclononane (L) having the general structure 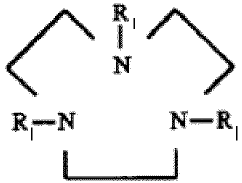 in which R₁ is as defined above; wherein the 1,4,7-trialkyl-1,4,7-triazacyclononane (L) is present in an amount such that the molar ratio of L:Mn is at least 2.5:1. The L:Mn molar ratio generally will be at most 20:1, preferably at most 15:1 and more preferably at most 12:1. An L:Mn molar ratio up to 10:1 or 5:1 may specifically be mentioned. Preferably, Y is OC(R₂)O.

In accordance with a second aspect of the invention there is provided a mixture as drier, and a use therefor, for air-drying auto-oxidizable resin composition comprising a polymer comprising unsaturated fatty acid residues, said drier being obtainable by:
mixing a manganese triaza complex comprising the following structure: 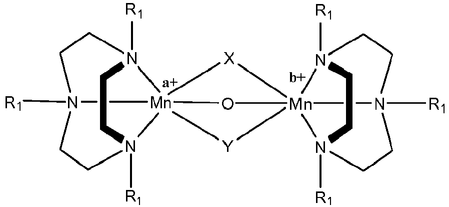 wherein
   R₁= C₁-C₂₀ alkyl optionally substituted with heteroatoms, or C₆-C₂₀ aryl optionally substituted with heteroatoms;
   X and Y are independently selected from O and OC(R₂)O, in which a=4 when X=O, and a=3 when X= OC(R₂)O, and in which b=4 when Y=O, and b=3 when Y= OC(R₂)O;
   Wherein R₂= C₁-C₂₀ alkyl optionally substituted with heteroatoms, C₆-C₂₀ aryl optionally substituted with heteroatoms, or a polymeric residue,
   and one or more anions, being chosen PF₆⁻, SbF₆⁻, AsF₆⁻, BF₄⁻, B(C₆F₅)₄⁻, Cl⁻, Br⁻, I⁻, NO₃⁻, or R₃COO⁻or SO₄²⁻, and wherein R₃ is C₁-C₂₀ alkyl optionally substituted with heteroatoms, C₆-C₂₀ aryl optionally substituted with heteroatoms, or a polymeric residue,
and with an additional amount of
   1,4,7-trialkyl-1,4,7-triazacyclononane (L) having the general structure 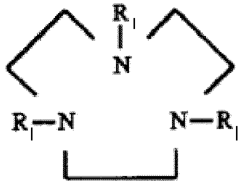 in which R₁ is as defined above; wherein the 1,4,7-trialkyl-1,4,7-triazacyclononane (L) is present in an amount such that the molar ratio of L:Mn is greater than 2.5:1. The L:Mn molar ratio generally will be at most 20:1, preferably at most 15:1 and more preferably at most 12:1. An L:Mn molar ratio up to 10:1 or 5:1 may specifically be mentioned.

In accordance with a third aspect of the present invention there is provided an air-drying auto-oxidisable resin composition comprising:
a) a drier as defined above; and,
b) a polymer comprising unsaturated fatty acid residues.

There is further provided a coating composition comprising the auto-oxidizable resin composition as defined above. That auto-oxidizable resin composition may be used in paints, lacquers, inks and varnishes.

The invention also relates to a method of coating a substrate comprising the steps of: applying the coating composition onto said substrate; and, drying the coating composition in the presence of air. The composition once applied may be allowed to dry naturally at ambient temperature, but the drying process may be accelerated by heat at a temperature above ambient temperature.

There is further provided according to the invention a substrate carrying a pigmented or non-pigmented coating derived from a coating composition of the invention.

### Definitions

Functionality is understood to be the average number of reactive groups of a certain type per molecule in the resin composition.

Polymer and resin are herein interchangeable terms.

As used herein, the term "oxidatively crosslinkable resin" includes any type of polymer which comprises unsaturated aliphatic groups, most typically unsaturated fatty acid residues. These unsaturated aliphatic groups or unsaturated fatty acid residues ensure the air drying properties but do not preclude the resin from comprising either saturated fatty acid residues or other functional groups. Generally, the unsaturated fatty acid residue is a carboxylic acid with a C₁₂ to C₃₀ carbon atom chain.

By semi-drying and drying fatty acids is meant fatty acids that have the same fatty acid composition as the oils they are derived from. The classification of the oils is based on the iodine number; for drying oil the iodine number is >140; for semi-drying oil the iodine number is ranging between 125 and 140, and for non-drying oil the iodine number is <125 ("Surface Coatings", by Swaraj Paul, John Wiley and Sons; p.89).

Whilst the term "drier" is used herein for a metal salt which acts as a catalyst for the auto-oxidation reaction which is initiated on drying, it will be recognized that the terms "siccative", "desiccator" or "desiccative" are used as synonyms for drier in this art.

### DETAILED DESCRIPTION OF THE INVENTION

### The drier

1,4,7-trialkyl-1,4,7-triazacyclononane (L) is a polydentate ligand having following general structure:

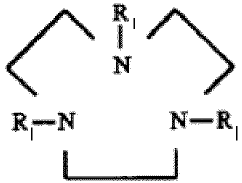

By polydentate is meant that the ligand contains multiple donor atoms available for coordination with manganese. Herein R₁ is C₁-C₂₀ alkyl optionally substituted with heteroatoms, or C₆-C₂₀ aryl optionally substituted with heteroatoms. Preferably R₁ is a C₁-C₆ alkyl, and more preferably R₁ is methyl such that specifically L is 1,4,7-trimethyl-1,4,7-triazacyclononane (TMTACN).

As defined above, the di-manganese-oxy bridged salt from which the drier is derived has the general formula Mn^{a+}bridgeMn^{b+}[X]ₙ, wherein anion X is selected from one or more of PF₆⁻, SbF₆⁻, AsF₆⁻, BF₄⁻, B(C₆F₅)₄⁻, Cl⁻, Br⁻, I⁻, NO₃⁻, R₃COO⁻ or SO₄²⁻, and wherein R₃ is C₁-C₂₀ alkyl optionally substituted with heteroatoms, C₆-C₂₀ aryl optionally substituted with heteroatoms, or a polymeric residue. The anions balance the charge on the manganese ions minus the bridging ions. Preferably, the anion is R₃COO⁻, wherein R₃ is a C₁-C₂₀, preferably a C₁-C₁₂, alkyl group, wherein the alkyl group is straight or branched chain, saturated or unsaturated. A suitable example of R₃ is methyl, and the anion is therefore acetate.

At least one of the bridging ions is an oxy-bridge. The other two bridging ions preferably are independently either oxy (-O-) or carboxy (-OC(R₂)O⁻). Preferably, X is an oxy-bridge, and in another preferred embodiment, Y is an oxy-bridge. Hence, in one embodiment, a tri-oxy-bridged dinuclear manganese complex is preferred. In another embodiment, a two-oxy bridged dinuclear manganese complex is preferred, for example while using acetate anions.

The oxy bridged dinuclear manganese complex may already contain 1,4,7-trialky-1,4,7-triazacyclononane (TACN) ligands, but this is not necessary, as other ligands can be used if they have a lower binding constant than the TACN ligands. If TACN ligands are not part of the original oxy bridged dinuclear manganese complex, obviously, sufficient TACN ligand needs to be supplied to achieve the aimed for ration.

In one preferred embodiment, the oxy bridged dinuclear manganese complex is a di-oxy bridged di nuclear manganese-TMTACN complex with acetate anions (R₁=methyl; R₃=methyl), and further TMTACN ligand is added to the manganese complex in the amounts mentioned above.

As described above R₂ may be C₁-C₂₀ alkyl optionally substituted with heteroatoms, C₆-C₂₀ aryl optionally substituted with heteroatoms, or a polymeric residue. Preferably R₂ is a C₁-C₂₀ alkyl group, wherein the alkyl group is straight or branched chain, saturated or unsaturated.

The aliphatic chain, including the branching group(s), in the acids of the manganese carboxylates may contain, or be substituted by, one or more atoms or groups which are inert under the conditions to which the carboxylates are subjected during processing and use. However, it is preferred that the aliphatic chain, including any branching group(s), is made up of carbon and hydrogen atoms only. Furthermore, the aliphatic chain, including any branching group(s), is preferably saturated.

Most preferably R₂ is a C₄-C₁₂, branched or straight chain, saturated aliphatic group. Specific examples of such carboxylate anions include: 4-methylpentanoate; 5-methylhexanoate; 2-ethylhexanoate; 3-ethylhexanoate; 3,5-dimethylhexanoate; 4,5-dimethylhexanoate; 3,4-dimethylhexanoate; 3,5,5-trimethylhexanoate; 4-methylheptanoate; 5-methylheptanoate; 6-methylheptanoate; 4,6-dimethylheptanoate; 7-methyloctanoate; 8-methylnonanoate; and, 9-methyldecanoate.

The drier may be prepared by mixing together a di-manganese bridged salt and an excess ligand (L), one or both components being dispersed in an appropriate liquid medium. The ligand (L) may, for example, be dispersed in one or more suitable organic solvents. The ligand can be bought e.g. at Sigma-Aldrich. The ligand can also be used as such.

It is also envisaged that the drier may be formed *in situ* within the auto-oxidizable resin composition: a resin composition may be provided in which the di-manganese-oxy bridged salt has been premixed; the ligand (L) is then mixed into the resin composition in an amount such that the molar ratio of L: Mn is greater than 2.5:1. This operation preferably occurs at room temperature.

It is furthermore envisaged that the drier is prepared by mixing a binuclear oxybridge-bridged manganese-L complex and an additional amount of ligand in a coating composition.

### Auto-oxidizable Drying Resin Composition

In general, the oxidatively drying resin may be selected from alkyds, vinyl polymers, polyurethane resins, hyperbranched resins and mixtures thereof. The driers of the present invention are however considered to have particular utility for alkyd resins.

The number average molecular weight (Mn) of the oxidatively drying resin will generally be above 150, more usually higher than 1,000 and most typically higher than 5,000. For reasons of viscosity, the number average molecular weight (Mn) should generally be below 120,000, and more usually below 80,000.

The amount of unsaturated fatty acid residues in the oxidatively drying resin will depend on the polymer type. However, preferably the resin will comprise ≥ 20 wt%, more preferably ≥ 50 wt%, and most preferably ≥ 75 wt% of unsaturated fatty acid residues based on the total solids content of the resin.

Suitable drying unsaturated fatty acids, semi-drying fatty acids or mixture thereof, useful herein for providing the fatty acid groups in the resin include ethylenically unsaturated conjugated or nonconjugated C₁₂-C₂₄ carboxylic acids, such as myristoleic, palmitoleic, arachidonic, erucic, gadoleic, clupanadonic, oleic, ricinoleic, linoleic, linolenic, licanic, nisinic acid and eleostearic acids or mixture thereof, typically used in the form of mixtures of fatty acids derived from natural or synthetic oils. Suitable unsaturated fatty acids for providing fatty acid groups in the resin also include fatty acids derived from soybean oil, conjugated soybean oil, palm oil, linseed oil, tung oil, rapeseed oil, sunflower oil, conjugated sunflower oil, calendula oil, wood oil, tallow oil, (dehydrated) castor oil, safflower oil, tuna fish oil, coconut oil and dehydrated coconut oil, and combinations thereof. Whilst the main crosslinking mechanism of the composition of the present invention is by auto-oxidation, other crosslinking mechanisms may supplement this to give dual (or multiple) curing. Such secondary curing mechanisms may result from providing the unsaturated fatty acid functionalized polymer with additional functional groups - such as vinyl and carbonyl groups - that may provide further crosslinking, resulting in an even faster drying process of the coating composition. A person of ordinary skill in the art would be aware of a number of suitable, secondary crosslinking groups, which may of course be blocked or unblocked.

Such functional groups may be introduced into the auto-oxidisable resin using two general methods: i) by utilising monomers carrying the functional group in the polymerisation process used to form the auto-oxidisable resin; or ii) utilising monomers bearing selected reactive groups and which monomer is subsequently reacted with a compound carrying the functional group and also a reactive group of the type which will react with the selected reactive groups on the monomer to provide attachment of the functional group to the auto-oxidisable resin via covalent bonding. However, the presence of such groups should be selected such that the most significant part of any crosslinking reaction(s) only takes place after application of the resin to a substrate. This will avoid an "in-can" build-up of the molecular weight of the resins which may be problematic where the viscosity of the resin composition either becomes too high for application or becomes too high for effective leveling of the composition upon its application to a substrate or in the early stages of drying.

The auto-oxidative curing of the composition preferably takes place at ambient temperature, said temperature being herein from 0 to 40°C, preferably from 5 to 30°C and most preferably from 10 to 25°C.

It is envisaged that the oxidatively drying resin may be used in combination with other resins, for example acrylic resins or polyurethanes. Any such mixed binder system should preferably comprise at least 60 wt. % of oxidatively drying resin, based on total resin.

### Vinyl Polymers

By vinyl polymer herein is meant a polymer derived from ethylenically unsaturated monomers. (Poly)acrylates, also known as acrylics, are polymers derived from monomers which comprise alkyl esters of (meth) acrylic acid. The vinyl auto-oxidisable polymer is preferably prepared by free radical polymerization of vinyl monomers using a suitable initiator. Examples of vinyl monomers include: 1,3-butadiene, isoprene, styrene, α-methyl styrene, divinyl benzene, (meth)acrylonitrile, vinyl halides, vinylidene halides, vinyl ethers, vinyl esters, heterocyclic vinyl compounds, alkyl esters of mono-olefinically unsaturated dicarboxylic acids, and, in particular, C₁ to C₂₀ alkyl esters of (meth)acrylic acid. Of these, particularly preferred monomers include butyl (meth)acrylate, methyl (meth)acrylate methyl methacrylate, ethyl hexyl methacrylate, acrylonitrile, vinyl acetate and styrene.

Monomers which are useful for grafting the fatty acid onto the vinyl polymer to give fatty acid residues include hydroxylalkyl(meth)acrylates, such as hydroxyethyl(meth)acrylate, hydroxypropyl(meth)acrylate and epoxy functional vinyl monomers like glycidyl(meth)acrylate (GMA) or 3,4-epoxy-cyclohexylmethyl-acrylate. The incorporation of unsaturated fatty acid groups into vinyl polymers in also described *inter alia* in: US Patent No. 7,235,603; US Patent No. 6,599,972; US Patent No. 6,624,223; US Patent No. 3,988,273; and, WO2007/042684.

The vinyl monomers may optionally contain functional groups which can contribute to the crosslinking of the vinyl polymer(s) in the coating. Examples of such groups include maleic, epoxy, fumaric, acetoacetoxy, β-diketone, unsaturated fatty acid, acryloyl, methacrylol, styrenic, (meth)allyl groups, mercapto groups, keto or aldehyde groups (such as methylvinylketone, diacetoneacrylamide and (meth)acrolein).

Preferably the acid value of the vinyl polymer is from 0 to 60 mg KOH/g polymer, more preferably from 10 to 45 mg KOH/g and most preferably from 15 to 35 mg KOH/g polymer.

### Hyperbranched Resins

WO 2007/147559, herein incorporated by reference, describes water soluble unsaturated fatty acid functional hyperbranched polyamides suitable for use in the present invention. The hyperbranched polyamide resin preferably has an amide (NH-C=0 or N-C=0) group content of < 500 mmoles/100g solid amide group containing resin, more preferably <400 mmoles/100g and most preferably < 300 mmoles/100g solid amide group containing resin.

Hyperbranched polyesteramide resins, which may also find utility in the present invention, are polymers having branched structure with a high functionality obtained by the polycondensation of, for example, an anhydride with an alkanol-amine. Such resins and their methods of production are described in WO 99/16810, the disclosure of which is herein incorporated by reference. Broadly, the polyesteramide is prepared from three components, at least one anhydride, at least one alkanol-amine and at least one unsaturated fatty acid to impart the air-drying property. The alkanol-amine may be a monoalkanol-amine, a dialkanol-amine, a trialkanol-amine or a mixture thereof: to form highly branched structures, di- and trialkanol-amines should be used, in which regard diisopropanolamine (DIPA) may be mentioned as a preferred example.

Further hyperbranched polymers are described in: US Patent Application Publication No. 20090191412 (Van Benthem et al.); US Patent No. 5,731,095; EP 1440107 A1; Tomalia et al. Angewandte Chemie International (Edition English) 1990, Vol. 29, pp.138-175; and, Encyclopaedia of Polymer Science and Engineering, Volume Index 1990, pp. 46-92.

### Polyurethane Resins

Polyurethane polymers generally contain urethane groups (-NHCOO-) or urea groups (CO(NH)₂) in their backbone structure. They are typically formed by the reaction of a polyisocyanate with a polyol and polyamines. Auto-oxidisable aqueous polyurethane dispersions are obtainable by reacting drying and/or semidrying oils with low molecular weight polyhydroxy compounds to yield compounds which contain on average at least one hydroxyl group and at least one residue of a fatty acid having at least one C=C double bond; these compounds are then reacted together with polyols, with compounds which have at least two isocyanate-reactive groups and at least one acid group or at least one group which, after neutralisation, forms a cationic group, like, for example, an ammonium group, with polyfunctional isocyanates. If desired, the prepolymer is then reacted with a compound which has an isocyanate-reactive group, followed by neutralizing the product formed with tertiary amines or mono-functional acids and transferring the utilized product to the aqueous phase, and subsequently, if desired, reacting any excess isocyanate groups still present by adding chain extenders, which have at least two primary or secondary amino groups or hydrazine groups per molecule.

Suitable isocyanates used as building blocks for the auto-oxidisable polyurethane resin are for example diisocyanates, such as 1,6-hexane diisocyanate, isophorone diisocyanate, toluene diisocyanate, diphenyl diisocyanate, and dicyclo- hexylmethane diisocyanate. Triisocyanates can also be used.

### Alkyds

By alkyd resin herein is meant a resin prepared from the reaction of a polyhydric alcohol, a polybasic acid and an unsaturated oil or fatty acid to give an unsaturated fatty acid residue containing ester. The unsaturation in the ester polyol imparts latent cross-linkability upon auto-oxidation so that when a coating composition thereof is dried in the air, in conjunction with the drier salt, the coating material undergoes cross-linking (by auto-oxidation) and thereby improving its properties, for example its chemical resistance, hardness and/or durability.

The term alkyd resin is also meant to include such modified alkyds for specific applications, such as silicon-based alkyds, thixotropic alkyds and, most importantly, urethane-modified alkyds. As such, the alkyd resin may be based on pure polyester resin (not having urethane and/or amide groups), polyesteramide resin, urethanised polyester resin, urethanised polyesteramide resin and mixtures thereof. In addition, styrene- (meth)acrylate modified alkyd polymers, whereby preformed alkyds are modified with styrene and (meth)acrylate monomers to form alkyd-styrene-(meth)acrylate hybrid polymers, are suitable examples of alkyds for use in the present invention.

Examples of suitable divalent polyol compounds are ethylene glycol, 1,3-propane diol, 1,6-hexane diol, 1,12-dodecane diol, 3-methyl-1,5-pentane diol, 2,2,4-trimethyl-1,6-hexane diol, 2,2-dimethyl-1,3-propane diol, and 2-methyl-2-cyclohexyl-1,3-propane diol. Examples of suitable triols are glycerol, trimethylol ethane, and trimethylol propane. Suitable polyols having more than 3 hydroxyl groups are pentaerythritol, sorbitol, and etherification products of the compounds in question, such as ditrimethylol propane and di-, tri-, and tetrapentaerythritol. Optionally, use is made of compounds having 3-12 carbon atoms, e.g., glycerol, pentaerythritol and/or dipentaerythritol.

Alternatively or additionally, polycarboxylic acids can be used as building blocks for the oxidatively drying polyunsaturated condensation products. Examples of suitable polycarboxylic acids include phthalic acid, citric acid, fumaric acid, mesaconic acid, maleic acid, citraconic acid, isophthalic acid, terephthalic acid, 5-tert. butyl isophthalic acid, trimellitic acid, pyromellitic acid, succinic acid, adipic acid, 2,2,4-trimethyl adipic acid, azelaic acid, sebacic acid, dimerized fatty acids, cyclopentane-1,2-dicarboxylic acid, cyclohexane-1,2-dicarboxylic acid, 4-methylcyclohexane-1,2-dicarboxylic acid, tetrahydrophthalic acid, endomethylene-cyclohexane-1,2-dicarboxylic acid, butane-1,2,3,4-tetra-carboxylic acid, endoisopropylidene-cyclohexane-1,2-dicarboxylic acid, cyclohexane-1,2,4,5-tetracarboxylic acid, and butane-1,2,3,4-tetracarboxylic acid. If so desired, the carboxylic acids in question may be used as anhydrides or in the form of an ester, e.g., an ester of an alcohol having 1-4 carbon atoms.

At least a part of the alkyd resin is oxidatively crosslinkable as a result of the incorporation of unsaturated, aliphatic compounds as described above. Fatty acids containing conjugated double bonds, such as dehydrated castor oil fatty acid, wood oil fatty acid and/or calendula oil fatty acid, may be mentioned specifically. Fatty acids derived from soya oil are especially suitable.
The unsaturated groups in the oxidatively drying polyunsaturated condensation product can be introduced by the fatty acids, but may, alternatively or additionally, be introduced by one or more of the polyols, carboxylic acids or anhydrides or other building blocks used, such as fatty monoalcohols. The oxidatively drying polyunsaturated condensation product can for instance have pendant groups in an amount of more than 20%, e.g., more than 50%, or more than 65% by weight of the condensation product.

A specific example of a suitable alkyd is the condensation product of soya oil, phthalic anhydride, and pentaerythritol.

Optionally, the oxidatively drying polyunsaturated condensation product may comprise other building blocks, which can for example be derived from monocarboxylic acids such as pivalic acid, 2-ethylhexanoic acid, lauric acid, palmitic acid, stearic acid, 4-tert. butyl-benzoic acid, cyclopentane carboxylic acid, naphthenic acid, cyclohexane carboxylic acid, 2,4-dimethyl benzoic acid, 2-methyl benzoic acid, benzoic acid, 2,2-dimethylol propionic acid, tetrahydrobenzoic acid, and hydrogenated or non-hydrogenated abietic acid or its isomer. If so desired, the monocarboxylic acids in question may be used wholly or in part as triglyceride, e.g., as vegetable oil, in the preparation of the alkyd resin. If so desired, mixtures of two or more of such monocarboxylic acids or triglycerides may be employed.

Optionally, isocyanates may also be used as building blocks for the oxidatively drying polyunsaturated condensation product. Suitable isocyanates include diisocyanates, such as 1,6-hexane diisocyanate, isophorone diisocyanate, toluene diisocyanate, diphenyl diisocyanate, and dicyclo-hexylmethane diisocyanate, and triisocyanates.

The alkyd resins can be obtained by direct esterification of the constituent components, with the option of a portion of these components having been converted already into ester diols or polyester diols. Alternatively, the unsaturated fatty acids can be added in the form of a drying oil, such as sunflower oil, linseed oil, tuna fish oil, dehydrated castor oil, coconut oil, and dehydrated coconut oil. Transesterification with the polyols and, optionally, other building blocks will then give the final alkyd resin. This transesterification generally takes place at a temperature of from 115 to 250°C., optionally with solvents such as toluene and/or xylene also present. The reaction generally is carried out in the presence of a catalytic amount of a transesterification catalyst. Examples of suitable transesterification catalysts include acids, such as p-toluene sulphonic acid, a basic compound such as an amine, or compounds such as calcium oxide, zinc oxide, tetraisopropyl orthotitanate, dibutyl tin oxide, and triphenyl benzyl phosphonium chloride.

General processes for the preparation of alkyd polyesters are described in "Alkyd Resin Technology" by T. C. Patton, Publisher John Wiley & Sons Inc. (1962), the disclosure of which is incorporated herein by reference.

Alkyds are often characterized by their oil length. Oil length is defined as the weight percentage of fatty acid building blocks (calculated as their triglycerides) in the alkyd resin. Long oil lengths (55% or higher) result in improved oxidative drying, good substrate adhesion, excellent flow properties, good solubility in aliphatic solvents, and low viscosity, even with low solvent content. However, these alkyds show strong yellowing. Medium oil length alkyds (40-55%) also have good solubility but show a higher viscosity. Paint films made of medium oil length alkyds have better mechanical properties such as hardness and durability. Short oil length alkyds (less than 40%) require additional measures, such as the use of additional siccatives or amino resins, to obtain acceptable drying times. The catalyst according to the present invention can be used with alkyds of any oil length.

Preferably the alkyds described herein have a final polymer acid value of from 1 to 20 mg KOH/g resin, thereby making them suitable for the preparation of the Mn complex drier *in situ* with the alkyd resin.

### Auto-Oxidizable Coating Composition

The auto-oxidisable coating composition of the invention may comprise a liquid medium, that is a low viscosity solvent such as water, organic (co-)solvents and mixtures thereof.

The composition of the present invention may be formulated as a solvent-borne coating composition. In this embodiment reactive diluents may be used to reduce the volatile organic content (VOC) below 300 g/l, a so-called high solids composition (solids content more than about 60%). However, it is also suitable for conventional coating compositions with a higher solvent content. In this context, VOC is determined in accordance with US standard ASTM D2369 (1hr, 110°C.). Suitable solvents are, for instance, aromatic solvents such as toluene or xylene, as well as aliphatic solvents such as ethyl diglycol, ethyl glycol acetate, butyl glycol, butyl glycol acetate, butyl diglycol, butyl diglycol acetate, and methoxypropylene glycol acetate. Commercially available solvents are for instance Shellsol^{(R)} D40, an aliphatic hydrocarbon solvent available from Shell, Dowanol^{(R)} PMA from Dow, and Solvesso^{(R)}-150, available from ExxonMobil.

Alternatively, the compositions according to the invention may be water-borne, can be used in an oxidatively drying water borne composition, optionally comprising co-solvents or humectants, such as glycols. Particularly useful for water borne compositions are reactive diluents with ionic or non-ionic stabilizing groups. These groups can, for example, be obtained by using diols or diesters containing carboxyl, sulfosuccinate or polyethylene glycol side groups.

As is known in the art, surfactants may be utilized to assist in the dispersion of the auto-oxidizable (alkyd) resin in water. Suitable surfactants include, but are not limited to, conventional anionic, cationic and/or non-ionic surfactants.

The liquid medium can also comprise reactive diluents, i.e. solvents which comprise functionalities which are able to react in the drying process with the unsaturated fatty acid residue comprising polymer. Thus, the reactive diluent is not co-reacted directly with the polymer, but participates to the drying process. Examples of such reactive diluents are the vinyl monomers described hereinabove.

In a preferred embodiment of the invention, the composition of the present invention is used in solvent borne coating compositions.

The composition according to the invention can be used as a clear varnish or may contain pigments. Pigments can ordinarily include opacifying pigments, such as titanium dioxide, zinc oxide, leaded zinc oxide, or tinting pigments, such as carbon black, yellow oxides, brown oxides, tan oxides, raw and burnt sienna or umber, chromium oxide green, phthalocyanine green, phthalonitrile blue, ultramarine blue, cadmium pigments or chromium pigments. Fillers can also be added, such as clay, silica, talc, or mica.

The coating composition can furthermore contain one or more additives such as secondary driers, UV stabilizers, co-solvents, dispersants, surfactants, inhibitors, fillers, anti-static agents, flame-retardant agents, lubricants, anti-foaming agents, extenders, plasticizers, anti-freezing agents, waxes, thickeners, or thixotropic agents.

Furthermore, the coating composition according to the invention may optionally comprise various anti-oxidants and anti-skinning agents such as methylethylketoxime, acetonoxime, butyraldoxime, dialkylhydroxylamine, cyclohexanoneoxime or mixtures thereof. Where present, the concentration of antioxidant or anti-skinning compound applied is preferably in a range of from 0.001 to 2 wt.%, by weight of the composition.

The total amount of primary manganese drier responsible for catalytic activity in the coating composition should not typically exceed 10 wt.%, based on the total coating composition, and preferably should be in the range from 0.001-3 wt%, and even more preferably between 0.01 to 3 wt.%, based on total coating composition. The amount of primary manganese drier is calculated on manganese plus multidentate ligand.

The primary manganese drier may be used together with one or more auxiliary driers and/or coordination driers in order to enhance the activity of the primary drier and / or the final characteristics of the dried coating, such as hardness and glossiness. Auxiliary driers interact with the primary drier. Coordination driers form coordination complexes with hydroxyl groups within the alkyd composition and thus help to stabilize the polymer network of the alkyd composition. The total amount of the auxiliary and / or co-ordination driers in the coating composition should not typically exceed 10 wt.%, based on the weight of the coating composition, and preferably should be in the range from 0.01 to 3 wt.%, based on total coating composition.

Such auxiliary and/or coordination driers are typically polyvalent salts containing: barium, zirconium, calcium, bismuth, copper, zinc, iron, potassium, strontium neodymium, sodium or lithium as the cation; and, halides, nitrates, sulphates, carboxylates like acetates, ethylhexanoates, octanoates and naphthenates or acetoacetonates as the anion. Metallic soaps, which are soluble in the binder of the coating composition, may in particular be mentioned in this regard; examples of such soaps, which may be used individually or in combination, include strontium octoate, copper octoate, zirconium octoate, zinc octoate and calcium octoate.

Besides these driers, the coating composition may optionally comprise drying-accelerating complexing agents, for example, 2,2'-bipyridyl and 1,10-phenantroline. The complexing agents can be added in an amount of from 0 to 3 wt. %, preferably from 0.1 to 1.5 wt.%, based on the weight of the total coating composition.

Other ingredients that may be present in the coating composition depend on the envisaged application of the composition. Examples are antisettling agents, anti-sagging agents, de-airing agents, and the like. The sum of the amounts of the various additives will usually not exceed 5 wt.%, based on the total weight of the coating composition.

The coating compositions of the present invention can be pigmented or un-pigmented and may find utility as an adhesive, as primer, as a topcoat, as a high-gloss or matt coating, as a stain-resistant coating, a wood oil, a wall paint or a flooring paint. The term "paint" is not intended to be limited in this context and incorporates varnishes, enamels and lacquers for architectural or industrial use, indoors or outdoors.

Suitable substrates which may be coated with the auto-oxidisable coating composition of the invention include wood, wooden based substrates (e.g. MDF, chipboard), metal, stone, plastics and plastic films, natural and synthetic fibers, glass, ceramics, plaster, asphalt, concrete, leather, paper, foam, masonry and/or board. The application to such substrates may be effected by any conventional method, including brushing, dipping, flow coating, spraying, roller coating, pad coating, flexo printing, gravure printing, and ink-jet printing. For spraying, further dilution of the composition with a suitable solvent (for example acetone) may be required.

The present invention will now be further illustrated - but in no way limited - by reference to the following examples.

### Experimental

Drying times were determined by BK drying on a BK recorder (wet film thickness, 90 µm; ASTM D5895-96). After the application of the film on a glass strip (B.K. recorder: 30.5 x 2.5 cm) a vertical blunt needle, pressed upon by a 5g load, is placed into the freshly applied film and then dragged through the drying paint in a direction parallel to the edges of the strip.

The three stages of BK drying in the experiment were as follows: i) the (wet) paint flows together (leveling); b) the paint has begun to polymerize but a line left by the needle is visible or traceable (basis trace); and, c) drying has proceeded sufficiently that the film of paint is not displaced by the needle (the so-called "surface dry time"). In Table 3, the drying time in hr of steps a, b and c is given, at either 10 or 23 °C.

Yellowing was measured with a standard colorimeter, the results are given as b*value according to CIE-lab color space.

As used herein: TMTACN (1,4,7-trimethyl-1,4,7-triazacyclononane) is used as liquid as such, without an additional solvent; Co-Drier is a cobalt drier (10%, commercially available from Rockwood); "PF6 complex": Dragon catalyst from Catexel (binuclear Mn(IV)-TMTACN complex with triple oxygen bridge and 2 PF6 anions).

### Examples 1-3 and experiments A and B

A base coating composition was made, comprising the following components as given in Table 1:

**Table 1**

| **name** | **Description** | **amount** (wt%) |
|---|---|---|
| Setal 270 SM-70 | long oil alkyd resin soybean oil based | 57.3 |
| Nuodex Ca 5 | Ca carboxylate in organic solvent | 2 |
| Nuodex Zr 18 | Zr carboxylate in organic solvent | 2 |
| EXKIN 2 | methyl ethyl ketoximine | 0.5 |
| Shellsol D40 | hydrotreated heavy nafta petroleum | 13.6-14.3 |
| BORCHIGEN 911 | Amphoteric surfactants blend | 0.09 |
| Bentone SD-1 | organic derivative of a bentonite clay | 0.2 |
| TIOXIDE TR 92 | titanium dioxide, rutile | 23.7 |

To this paint formulation, primary driers were added. The components used are given in Table 2:

**Table 2**

| **name** | **Description** |
|---|---|
| TMTACN | 1,4,7-trimethyl-1,4,7-triazacyclononane |
| PF6 complex | Dragon catalyst from Catexel (binuclear Mn(IV)-TMTACN complex with triple oxygen bridge and 2 PF6 anions |
| Co-10 | Cobalt carboxylate |

In the following experiments, the drier system according the present invention is compared with manganese-oxo bridged complexes, and a conventional cobalt drier.

**Table 3**

| Experiment | Primary drier | Ligand added | Mn (mg) | Equiv ligand | BK drying 10 °C | BK drying 23 °C | Yellowing |
|---|---|---|---|---|---|---|---|
| Comp Ex A | PF6-complex | None | 5 | 1 | 25.5 | 18.5 | 2.09 |
| | | | | | | | |
| Example 1 | PF6-complex | TMTACN | 2.5 | 5 | 12 | 7 | 2.68 |
| Example 2 | PF6-complex | TMTACN | 2.5 | 10 | 6 | 4 | 3.28 |
| Example 3 | PF6-complex | TMTACN | 1.5 | 10 | 10 | 6.5 | 2.55 |
| | | | | | | | |
| Experiment B | Cobalt-10 | Not applicable | 30 mg Co | | 3.5 | 2.75 | 3.08 |

From the results in Table 3, it is clear that the trioxy-bridged manganese drier can become substantially more active by increasing the amount of tri-aza ligand. An increased cure speed was observed even when decreasing the amount of manganese by 50% or more. Furthermore, a conventional cobalt drier was used as further comparative experiment. The yellowing observed with conventional cobalt drier is about 3. The yellowing, although slightly increasing with the increased amount of ligand is well within acceptable values.

## Claims

1. A drier for an air drying auto-oxidisable resin composition comprising a polymer comprising unsaturated fatty acid residues, the drier comprising a manganese triaza complex comprising the following structure: 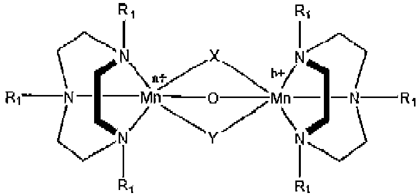 wherein
R₁= C₁-C₂₀ alkyl optionally substituted with heteroatoms, or C₆-C₂₀ aryl optionally substituted with heteroatoms;
X and Y are independently selected from O and OC(R₂)O, in which a=4 when X=O, and a=3 when X= OC(R₂)O, and in which b=4 when Y=O, and b=3 when Y= OC(R₂)O;
Wherein R₂= C₁-C₂₀ alkyl optionally substituted with heteroatoms, C₆-C₂₀ aryl optionally substituted with heteroatoms, or a polymeric residue,
and one or more anions, being chosen PF₆⁻, SbF₆⁻, AsF₆⁻, BF₄⁻, B(C₆F₅)₄⁻, Cl⁻, Br⁻, I⁻, NO₃⁻, or R₃COO⁻ or SO₄²⁻, and wherein R₃ is C₁-C₂₀ alkyl optionally substituted with heteroatoms, C₆-C₂₀ aryl optionally substituted with heteroatoms, or a polymeric residue,
and wherein the drier comprises an additional amount of
1,4,7-trialkyl-1,4,7-triazacyclononane (L) having the general structure 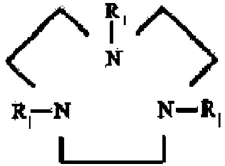 in which R₁ is as defined above; wherein the 1,4,7-trialkyl-1,4,7-triazacyclononane (L) is present in an amount such that the molar ratio of L:Mn is at least 2.5:1.

2. Drier obtainable by: mixing a manganese triaza complex according to the following structure: 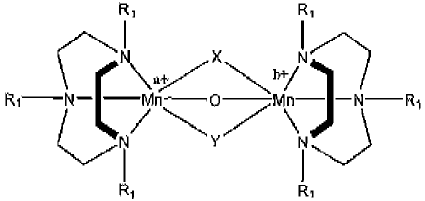 Wherein
R₁= C₁-C₂₀ alkyl optionally substituted with heteroatoms, or C₆-C₂₀ aryl optionally substituted with heteroatoms;
X and Y are independently selected from O and OC(R₂)O, in which a=4 when X=O, and a=3 when X= OC(R₂)O, and in which b=4 when Y=O, and b=3 when Y= OC(R₂)O;
Wherein R₂= C₁-C₂₀ alkyl optionally substituted with heteroatoms, C₆-C₂₀ aryl optionally substituted with heteroatoms, or a polymeric residue,
and one or more anions, being chosen PF₆⁻, SbF₆⁻, AsF₆⁻, BF₄⁻, B(C₆F₅)₄⁻, Cl⁻, Br⁻, I⁻, NO₃⁻, or R₃COO⁻ or SO₄²⁻, and wherein R₃ is C₁-C₂₀ alkyl optionally substituted with heteroatoms, C₆-C₂₀ aryl optionally substituted with heteroatoms, or a polymeric residue,
with an amount of 1,4,7-trialkyl-1,4,7-triazacyclononane (L) having the general structure 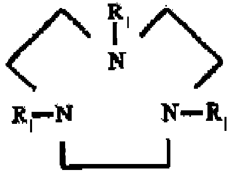 in which R₁ is as defined above;
wherein the 1,4,7-trialkyl-1,4,7-triazacyclononane (L) is present in an amount such that the molar ratio of L:Mn is greater than 2.5:1.

3. The drier according to any one of claims 1-2, wherein X is an oxy-bridge.

4. The drier according to any one of the preceding claims, wherein R₁ is a C₁-C₆ alkyl, preferably methyl.

5. The drier according to any one of the preceding claims, wherein the anion is R₃COO⁻, wherein R₃ is a C₁-C₂₀, preferably C₁-C₁₂ alkyl group, wherein the alkyl group is straight or branched chain, saturated or unsaturated.

6. The drier according to any one of the preceding claims, wherein the molar ration of L:Mn is lower than 20:1, preferably lower than 12:1.

7. An air-drying auto-oxidisable resin composition comprising:
a) a drier as defined in anyone of the preceding claims; and,
b) a polymer comprising unsaturated fatty acid residues.

8. The resin composition according to claim 7, wherein the drying resin is selected from alkyds, vinyl polymers, polyurethane resins, hyperbranched resins and mixtures thereof.

9. The resin composition according to claim 8, wherein the drying resin comprises an alkyd.

10. A coating composition comprising the resin composition as defined in any one of claims 7 to 9.

11. The coating composition according to claim 10, wherein the composition contains one or more auxiliary and/or coordination driers in an amount not exceeding 10 wt%.

12. A coating composition according to any one of claims 10-11 wherein the composition is solvent borne.

13. A method of coating a substrate comprising the steps of:
applying the coating composition as defined in any one of claims 10-12 onto said substrate; and,
drying the coating composition in the presence of air.

14. The method according to claim 13, wherein the drying occurs at ambient temperature.

15. A substrate provided with a coating composition as defined in any of claims 10-12.

16. Use of a composition as defined in any one of claims 7 to 9 in paints, adhesives, lacquers, inks and varnishes.

17. Use of a drier for air-drying auto-oxidizable resin composition comprising a polymer comprising unsaturated fatty acid residues, said drier being obtainable by:
mixing a manganese triaza complex comprising the following structure: 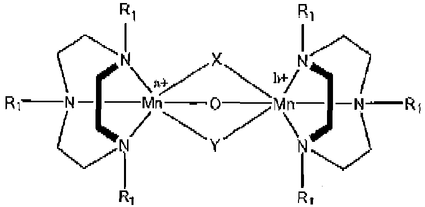 wherein
R₁= C₁-C₂₀ alkyl optionally substituted with heteroatoms, or C₆-C₂₀ aryl optionally substituted with heteroatoms;
X and Y are independently selected from O and OC(R₂)O, in which a=4 when X=O, and a=3 when X= OC(R₂)O, and in which b=4 when Y=0, and b=3 when Y= OC(R₂)O;
Wherein R₂= C₁-C₂₀ alkyl optionally substituted with heteroatoms, C₆-C₂₀ aryl optionally substituted with heteroatoms, or a polymeric residue,
and one or more anions, being chosen PF₆⁻, SbF₆⁻, AsF₆⁻, BF₄⁻, B(C₆F₅)₄⁻, Cl⁻, Br⁻, I⁻, NO₃⁻, or R₃COO⁻ or SO₄²⁻, and wherein R₃ is C₁-C₂₀ alkyl optionally substituted with heteroatoms, C₆-C₂₀ aryl optionally substituted with heteroatoms, or a polymeric residue,
and with an additional amount of
1,4,7-trialkyl-1,4,7-triazacyclononane (L) having the general structure 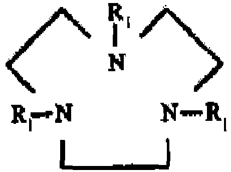 in which R₁ is as defined above; wherein the 1,4,7-trialkyl-1,4,7-triazacyclononane (L) is present in an amount such that the molar ratio of L:Mn is greater than 2.5:1.

## Patentansprüche

1. Trocknungsmittel für eine lufttrocknende, selbstoxidierende Beschichtungszusammensetzung, umfassend ein Polymer umfassend ungesättigte Fettsäurereste, wobei das Trocknungsmittel einen Mangan-Triaza-Komplex, umfassend die folgende Struktur, umfasst: 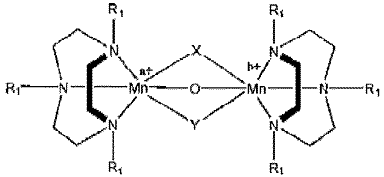 wobei
R₁= C₁-C₂₀ Alkyl, wahlweise substituiert mit Heteroatomen oder C₆-C₂₀ Aryl, wahlweise substituiert mit Heteroatomen, ist;
X und Y unabhängig aus O und OC(R₂)O ausgewählt sind, wobei a=4 ist, wenn X=O ist, und a=3 ist, wenn X= OC(R₂)O ist, und wobei b=4 ist, wenn Y=O ist, und b=3 ist, wenn Y= OC(R₂)O ist;
wobei R₂= C₁-C₂₀ Alkyl, wahlweise substituiert mit Heteroatomen, C₆-C₂₀ Aryl, wahlweise substituiert mit Heteroatomen, oder ein Polymerrest ist, und ein oder mehrere Anionen, ausgewählt aus PF₆⁻, SbF₆⁻, AsF₆⁻, BF₄⁻, B(C₆F₅)₄⁻, Cl⁻, Br⁻, I⁻, NO³⁻, oder R₃COO⁻ oder SO₄²⁻, und wobei R₃ gleich C₁-C₂₀ Alkyl, wahlweise substituiert mit Heteroatomen, C₆-C₂₀ Aryl, wahlweise substituiert mit Heteroatomen, oder ein Polymerrest ist,
und wobei das Trocknungsmittel eine zusätzliche Menge von 1,4,7 -Trialkyl-1,4,7-Triazacyclononan (L) mit der folgenden allgemeinen Struktur umfasst 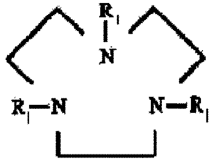 wobei R₁ ,wie oben definiert, ist; wobei das 1,4,7-Trialkyl-1,4,7-Triazacyclononan (L) in einer Menge vorhanden ist, so dass das Molverhältnis von L:Mn mindestens 2,5:1 ist.

2. Trocknungsmittel, erhältlich durch Mischen eines Mangan-Triaza-Komplex nach der folgenden Struktur: 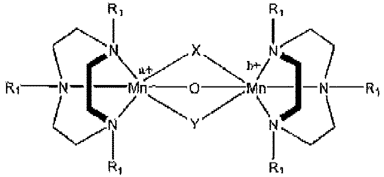 wobei
R₁= C₁-C₂₀ Alkyl, wahlweise substituiert mit Heteroatomen oder C₆-C₂₀ Aryl, wahlweise substituiert mit Heteroatomen, ist;
X und Y unabhängig aus O und OC(R₂)O ausgewählt sind, wobei a=4 ist, wenn X=O ist, und a=3 ist, wenn X= OC(R₂)O ist, und wobei b=4 ist, wenn Y=O ist, und b=3 ist, wenn Y= OC(R₂)O ist;
wobei R₂= C₁-C₂₀ Alkyl, wahlweise substituiert mit Heteroatomen, C₆-C₂₀ Aryl, wahlweise substituiert mit Heteroatomen, oder ein Polymerrest ist, und ein oder mehrere Anionen, ausgewählt aus PF₆⁻, SbF₆⁻, AsF₆⁻, BF₄⁻, B(C₆F₅)₄⁻, Cl⁻, Br⁻, I⁻, NO³⁻, oder R₃COO⁻ oder SO₄²⁻, und wobei R₃ gleich C₁-C₂₀ Alkyl, wahlweise substituiert mit Heteroatomen, C₆-C₂₀ Aryl, wahlweise substituiert mit Heteroatomen, oder ein Polymerrest ist,
mit einer zusätzlichen Menge von 1,4,7-Trialkyl-1,4,7-Triazacyclononan (L), das die folgende allgemeine Struktur hat 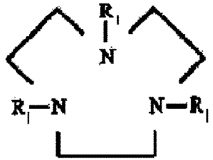 wobei R₁, wie oben definiert, ist;
wobei 1,4,7-Trialkyl-1,4,7-Triazacyclononan (L) in einer Menge vorhanden ist, so dass das Molverhältnis von L:Mn größer als 2,5:1 ist.

3. Trocknungsmittel nach einem der Ansprüche 1-2, wobei X eine Oxy-Brücke ist.

4. Trocknungsmittel nach einem der vorhergehenden Ansprüche, wobei R₁ ein C₁-C₆Alkyl, vorzugsweise Methyl, ist.

5. Trocknungsmittel nach einem der vorhergehenden Ansprüche, wobei das Anion R₃COO⁻ ist, wobei R₃ eine C₁-C₂₀, vorzugsweise eine C₁-C₁₂ Alkylgruppe ist, wobei die Alkylgruppe geradkettig oder verzweigtkettig, gesättigt oder ungesättigt ist.

6. Trocknungsmittel nach einem der vorhergehenden Ansprüche, wobei das Molverhältnis von L:Mn kleiner als 20:1, vorzugsweise kleiner als 12:1 ist.

7. Lufttrocknende, selbstoxidierende Harzzusammensetzung, umfassend:
a) ein Trocknungsmittel, wie in einem der vorhergehenden Ansprüche definiert; und
b) ein Polymer, umfassend ungesättigte Fettsäurereste.

8. Harzzusammensetzung nach Anspruch 7, wobei das trocknende Harz aus Alkyden, Vinylpolymeren, Polyurethanharzen, hochverzweigten Harzen und deren Mischungen ausgewählt ist.

9. Harzzusammensetzung nach Anspruch 8, wobei das trocknende Harz ein Alkyd umfasst.

10. Beschichtungszusammensetzung, umfassend die Harzzusammensetzung nach einem der Ansprüche 7 bis 9.

11. Beschichtungszusammensetzung nach Anspruch 10, wobei die Zusammensetzung einen oder mehrere Hilfstrocknungsmittel und/oder Koordinationstrocknungsmittel in einer Menge enthält, die 10 Gew.% nicht überschreitet.

12. Beschichtungszusammensetzung nach einem der Ansprüche 10-11, wobei die Zusammensetzung lösungsmittelbasiert ist.

13. Verfahren zum Beschichten eines Substrats, umfassend die folgenden Schritte:
Auftragen der Beschichtungszusammensetzung nach einem der Ansprüche 10-12 auf das Substrat; und
Trocknen der Beschichtungszusammensetzung in Gegenwart von Luft.

14. Verfahren nach Anspruch 13, wobei das Trocknen bei Umgebungstemperatur stattfindet.

15. Substrat, das mit einer Beschichtungszusammensetzung nach einem der Ansprüche 10-12 versehen ist.

16. Verwendung einer Zusammensetzung nach einem der Ansprüche 7 bis 9 in Anstrichfarben, Klebstoffen, Lacken, Tinten und Lasuren.

17. Verwendung eines Trocknungsmittels für eine lufttrocknende, selbstoxidierende Harzzusammensetzung, umfassend ein Polymer umfassend ungesättigte Fettsäurereste, wobei das Trocknungsmittel erhältlich ist durch:
Mischen eines Mangan-Triaza-Komplexes, umfassend die folgende Struktur: 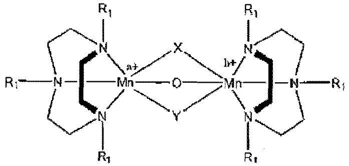 wobei
R₁= C₁-C₂₀ Alkyl, wahlweise substituiert mit Heteroatomen oder C₆-C₂₀ Aryl, wahlweise substituiert mit Heteroatomen, ist;
X und Y unabhängig aus O und OC(R₂)O ausgewählt sind, wobei a=4 ist, wenn X=O ist, und a=3 ist, wenn X= OC(R₂)O ist, und wobei b=4 ist, wenn Y=O ist, und b=3 ist, wenn Y= OC(R₂)O ist;
wobei R₂= C₁-C₂₀ Alkyl, wahlweise substituiert mit Heteroatomen, C₆-C₂₀ Aryl, wahlweise substituiert mit Heteroatomen, oder ein Polymerrest ist, und ein oder mehrere Anionen, ausgewählt aus PF₆⁻, SbF₆⁻, AsF₆⁻, BF₄⁻, B(C₆F₅)₄⁻, Cl⁻, Br⁻, I⁻, NO₃⁻, oder R₃COO⁻ oder SO₄²⁻, und wobei R₃ gleich C₁-C₂₀ Alkyl, wahlweise substituiert mit Heteroatomen, C₆-C₂₀ Aryl, wahlweise substituiert mit Heteroatomen, oder ein Polymerrest ist,
und mit einer zusätzlichen Menge von 1,4,7-Trialkyl-1,4,7-Triazacyclononan (L), die die folgende allgemeine Struktur umfasst 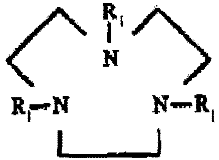 wobei R₁ ,wie oben definiert, ist; wobei das 1,4,7-Trialkyl-1,4,7-Triazacyclononan (L) in einer Menge vorhanden ist, so dass das Molverhältnis von L:Mn größer als 2,5:1 ist.

## Revendications

1. Siccatif pour une composition de résine auto-oxydable séchant à l'air comprenant un polymère qui comprend des résidus d'acides gras insaturés, le siccatif comprenant un complexe triaza de manganèse comprenant la structure suivante : 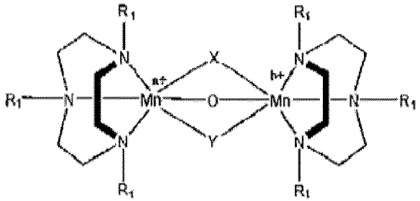 où
R₁ = un alkyle en C₁ à C₂₀ substitué facultativement par des hétéroatomes, ou un aryle en C₆ à C₂₀ substitué facultativement par des hétéroatomes ;
X et Y sont indépendamment choisis parmi O et OC(R₂)O, où a = 4 lorsque X = O, et a = 3 lorsque X = OC(R₂)O, et où b = 4 lorsque Y = O, et b = 3 lorsque Y = OC(R₂)O ;
où R₂ = un alkyle en C₁ à C₂₀ substitué facultativement par des hétéroatomes, un aryle en C₆ à C₂₀ substitué facultativement par des hétéroatomes, ou un résidu polymère,
et un ou plusieurs anion(s), étant choisi(s) parmi PF₆⁻, SbF₆⁻, AsF₆⁻, BF₄⁻, B(C₆F₅)₄⁻, Cl⁻, Br⁻, I⁻, NO₃⁻, ou R₃COO⁻, ou SO₄²⁻, et où R₃ est un alkyle en C₁ à C₂₀ substitué facultativement par des hétéroatomes, un aryle en C₆ à C₂₀ substitué facultativement par des hétéroatomes, ou un résidu polymère,
et où le siccatif comprend une quantité supplémentaire de 1,4,7-trialkyl-1,4,7-triazacyclononane (L) ayant la structure générale 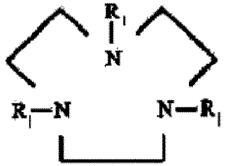 où R₁ est tel que défini ci-dessus ; où le 1,4,7-trialkyl-1,4,7-triazacyclononane (L) est présent en une quantité telle que le rapport molaire L : Mn soit au moins égal à 2,5 : 1.

2. Siccatif pouvant être obtenu par : mélange d'un complexe triaza de manganèse selon la structure suivante : 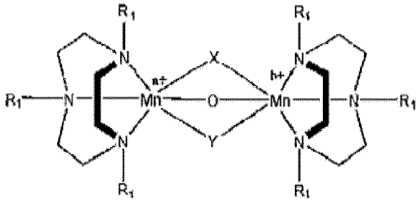 où
R₁ = un alkyle en C₁ à C₂₀ substitué facultativement par des hétéroatomes, ou un aryle en C₆ à C₂₀ substitué facultativement par des hétéroatomes ;
X et Y sont indépendamment choisis parmi O et OC(R₂)O, où a = 4 lorsque X = O, et a = 3 lorsque X = OC(R₂)O, et où b = 4 lorsque Y = O, et b = 3 lorsque Y = OC(R₂)O ;
où R₂ = un alkyle en C₁ à C₂₀ substitué facultativement par des hétéroatomes, un aryle en C₆ à C₂₀ substitué facultativement par des hétéroatomes, ou un résidu polymère,
et un ou plusieurs anion(s), étant choisis parmi PF₆⁻, SbF₆⁻, AsF₆⁻, BF₄⁻, B(C₆F₅)₄⁻, Cl⁻, Br⁻, I⁻, NO₃⁻, ou R₃COO⁻ ou SO₄²⁻, et où R₃ est un alkyle en C₁ à C₂₀ substitué facultativement par des hétéroatomes, un aryle en C₆ à C₂₀ substitué facultativement par des hétéroatomes, ou un résidu polymère,
avec une quantité de 1,4,7-trialkyl-1,4,7-triazacyclononane (L) ayant la structure générale 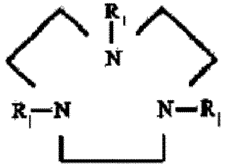 où R₁ est tel que défini ci-dessus ;
où le 1,4,7-trialkyl-1,4,7-triazacyclononane (L) est présent en une quantité telle que le rapport molaire L : Mn soit supérieur à 2,5 : 1.

3. Siccatif selon l'une quelconque des revendications 1 et 2, dans lequel X est un pont oxy.

4. Siccatif selon l'une quelconque des revendications précédentes, dans lequel R₁ est un alkyle en C1 à C₆, de préférence un méthyle.

5. Siccatif selon l'une quelconque des revendications précédentes, dans lequel l'anion est R₃COO⁻, où R₃ représente un groupe alkyle en C₁ à C₂₀, de préférence en C₁ à C₁₂, où le groupe alkyle est un groupe à chaîne linéaire ou ramifiée, saturé ou insaturé.

6. Siccatif selon l'une quelconque des revendications précédentes, dans lequel le rapport molaire L : Mn est inférieur à 20 : 1, de préférence inférieur à 12:1.

7. Composition de résine auto-oxydable séchant à l'air comprenant :
a) un siccatif tel que défini dans l'une quelconque des revendications précédentes ; et,
b) un polymère comprenant des résidus d'acides gras insaturés.

8. Composition de résine selon la revendication 7, dans laquelle la résine séchable est choisie parmi des alkydes, des polymères vinyliques, des résines polyuréthanes, des résines hyper-ramifiées et des mélanges de ceux-ci.

9. Composition de résine selon la revendication 8, dans laquelle la résine séchable comprend un alkyde.

10. Composition de revêtement comprenant la composition de résine telle que définie dans l'une quelconque des revendications 7 à 9.

11. Composition de revêtement selon la revendication 10, dans laquelle la composition contient un ou plusieurs siccatif(s) auxiliaire(s) et/ou de coordination en une quantité ne dépassant pas 10% en poids.

12. Composition de revêtement selon l'une quelconque des revendications 10 et 11, dans laquelle la composition est une solution à base de solvant.

13. Procédé de revêtement d'un substrat comprenant les étapes consistant :
à appliquer la composition de revêtement telle que définie dans l'une quelconque des revendications 10 à 12 sur ledit substrat ; et,
à sécher la composition de revêtement en présence d'air.

14. Procédé selon la revendication 13, dans lequel le séchage se produit à température ambiante.

15. Substrat doté d'une composition de revêtement telle que définie dans l'une des revendications 10 à 12.

16. Utilisation d'une composition telle que définie dans l'une quelconque des revendications 7 à 9 dans des peintures, des adhésifs, des laques, des encres et des vernis.

17. Utilisation d'un siccatif pour une composition de résine auto-oxydable séchant à l'air comprenant un polymère qui comprend des résidus d'acides gras insaturés, ledit siccatif pouvant être obtenu par : mélange d'un complexe triaza de manganèse comprenant la structure suivante : 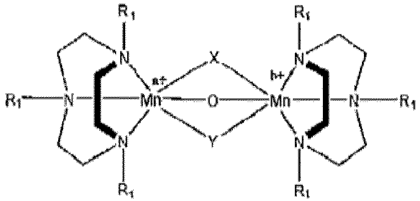 où
R₁ = un alkyle en C₁ à C₂₀ substitué facultativement par des hétéroatomes, ou un aryle en C₆ à C₂₀ substitué facultativement par des hétéroatomes ;
X et Y sont indépendamment choisis parmi O et OC(R₂)O, où a = 4 lorsque X = O, et a = 3 lorsque X = OC(R₂)O, et où b = 4 lorsque Y = O, et b = 3 lorsque Y = OC(R₂)O ;
où R₂ = un alkyle en C₁ à C₂₀ substitué facultativement par des hétéroatomes, un aryle en C₆ à C₂₀ substitué facultativement par des hétéroatomes, ou un résidu polymère,
et un ou plusieurs anion(s), étant choisis parmi PF₆⁻, SbF₆⁻, AsF₆⁻, BF₄⁻, B(C₆F₅)₄⁻, Cl⁻, Br⁻, I⁻, NO₃⁻, ou R₃COO⁻, ou SO₄²⁻, et où R₃ est un alkyle en C₁ à C₂₀ substitué facultativement par des hétéroatomes, un aryle en C₆ à C₂₀ substitué facultativement par des hétéroatomes, ou un résidu polymère,
et avec une quantité supplémentaire de 1,4,7-trialkyl-1,4,7-triazacyclononane (L) ayant la structure générale 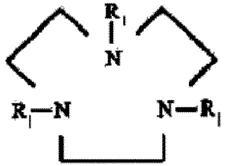 où R₁ est tel que défini ci-dessus ; où le 1,4,7-trialkyl-1,4,7-triazacyclononane (L) est présent en une quantité telle que le rapport molaire L : Mn soit supérieur à 2,5 : 1.
